# EUROPEAN PATENT SPECIFICATION

(11) **EP 4 537 169 B1**
(45) Date of publication and mention of the grant of the patent: **06.05.2026**
(21) Application number: 22737927.8
(22) Date of filing: 08.06.2022
(51) Int. Cl.: G05B 23/02, G06Q 10/06, B66B 25/00, G05B 19/042

(54) **MAINTENANCE MANAGEMENT OF PEOPLE CONVEYOR SYSTEM**
WARTUNGSVERWALTUNG EINES PERSONENFÖRDERSYSTEMS
GESTION DE MAINTENANCE DE SYSTÈME DE TRANSPORT DE PERSONNES

(43) Date of publication of application: 16.04.2025
(73) Proprietor: KONE Corporation, 00330 Helsinki (FI)
(72) Inventor: PEKANDER, Otto, 00330 Helsinki (FI); ZAKRZEWSKI, Mari, 00330 Helsinki (FI)
(74) Representative: Berggren Oy
(86) International application number: PCT/FI2022/050396
(87) International publication number: WO 2023/237805

(56) References cited:
- US-A1- 2020 053 325
- US-A1- 2020 193 392

## Description

### TECHNICAL FIELD

The invention concerns in general the technical field of people conveyor systems. More particularly, the invention concerns a management of maintenance operations.

### BACKGROUND

Different kinds of people conveyor systems are high-tech products consisting of a plurality of sub-systems and devices. Since the people conveyor systems are developed to serve individuals in a safe manner, there is a need to keep the conveyor systems operative at a high level of service. This requires continuous maintenance of the people conveyor systems so as to keep them in condition over the life cycle of the system.

The maintenance of the people conveyor systems is usually arranged so that a technician enters the site of the conveyor system under a predefined maintenance schedule and performs necessary operations thereto. Additionally, the conveyor systems are equipped with internal monitoring mechanisms by means of which it is possible to monitor an operation of the respective conveyor system. The internal monitoring mechanism may e.g. comprise sensors and the like to generate data descriptive of the operation of the people conveyor system which data is analyzed and conclusions on the operation of the system may be derived. As a result of the monitoring it is possible to generate notifications indicative of the operation of the system, such as malfunctioning. Such notifications may cause a generation of service requests so that a technician may visit the site to perform necessary maintenance operations.

On the other hand, autonomously moving vehicles, i.e. robots, are gaining more and more technical capabilities so as to enable them to execute operations as a service, which, in turn, allows a utilization of the robots in various contexts.

An example of an application of robots in a context of repairing industrial assets, like aircraft engines, is provided in a document US 2020/193392 A1.

As it is commonly known the maintenance operations vary a lot in nature and sending the technician at the site causes delay in the maintenance but also generates cost especially if the maintenance request is generated by mistake of the monitoring system, and/or the like. Hence, there is room for introducing novel approaches in the maintenance area so as to optimize an execution of the maintenance operation.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present a method, a control system, and a computer program for managing a maintenance of a people conveyor system.

The objects of the invention are reached by a method, a control system, and a computer program as defined by the respective independent claims.

According to a first aspect, a method for managing a maintenance of a people conveyor system is provided, the method, performed by a control system, comprises:
receiving data indicative of a state of the people conveyor system,
classifying the state of the people conveyor system to correspond to one maintenance operation among a plurality of maintenance operations , the plurality of maintenance operations at least comprising a number of mobile robot manageable maintenance operations and a number of human manageable maintenance operations,
setting, in accordance with a classification of the state of the people conveyor system, a detection result to express one of the following: (i) a mobile robot is required to perform the maintenance operation, (ii) a human operator is required to perform the maintenance operation.

For example, the data indicative of the state of the people conveyor system may be received from at least one of the following: a controller of the people conveyor system; at least one sensor arranged to measure at least one parameter descriptive of an operation of the people conveyor system; a safety circuit of the people conveyor system; a remote service centre of the people conveyor system.

The data received may comprise a fault code in the data descriptive of the state of the people conveyor system.

Moreover, the classifying may comprise a comparison of a number of parameters descriptive of the state of the people conveyor system to corresponding parameters associated to each maintenance operation among the plurality of the maintenance operations.

The method may further comprise, in response to setting the detection result to express that the mobile robot is required to perform the maintenance operation, steps of:
selecting the mobile robot for performing the maintenance operation,
generating a control signal to the selected mobile robot to cause performing of the maintenance operation.

The selecting of the mobile robot may e.g. be performed on a basis of a capability of the mobile robot with respect to the maintenance operation. The capability of the mobile robot may be defined based on a technical capability of the mobile robot to perform the maintenance operation. The capability of the mobile robot may further be defined based on an availability of the mobile robot to perform the maintenance operation at a predefined instant of time.

Still further, the method may further comprise, in response to setting the detection result to express that the human operator is required to perform the maintenance operation, steps of:
selecting the human operator for performing the maintenance operation,
generating a control signal to a terminal device of the selected human operator to cause performing of the maintenance operation.

The selecting of the human operator may be performed on a basis of a capability of the human operator with respect to the maintenance operation.

According to a second aspect, a control system for managing a maintenance of a people conveyor system is provided, the control system is configured to:
receive data indicative of a state of the people conveyor system,
classify the state of the people conveyor system to correspond to one maintenance operation among a plurality of maintenance operations , the plurality of maintenance operations at least comprising a number of mobile robot manageable maintenance operations and a number of hu-man manageable maintenance operations,
set, in accordance with a classification of the state of the people conveyor system, a detection result to express one of the following: (i) a mobile robot is required to perform the maintenance operation, (ii) a human operator is required to perform the maintenance operation.

The control system may be configured to receive the data indicative of the state of the people conveyor system from at least one of the following: a controller of the people conveyor system; at least one sensor arranged to measure at least one parameter descriptive of an operation of the people conveyor system; a safety circuit of the people conveyor system; a remote service centre of the people conveyor system.

For example, the control system may be configured to detect that the data received comprises a fault code in the data descriptive of the state of the people conveyor system.

The control system may be configured to perform the classifying by comparing a number of parameters descriptive of the state of the people conveyor system to corresponding parameters associated to each maintenance operation among the plurality of the maintenance operations.

Moreover, the control system may further be configured to, in response to setting the detection result to express that the mobile robot is required to perform the maintenance operation, to perform steps of:
selecting the mobile robot for performing the maintenance operation,
generating a control signal to the selected mobile robot to cause performing of the maintenance operation.

The control system may be configured to perform the selecting of the mobile robot on a basis of a capability of the mobile robot with respect to the maintenance operation. The control system may e.g. be configured to define the capability of the mobile robot defined based on a technical capability of the mobile robot to perform the maintenance operation. The control system may further be configured to define the capability of the mobile robot based on an availability of the mobile robot to perform the maintenance operation at a predefined instant of time.

The control system may further be configured to, in response to setting the detection result to express that the human operator is required to perform the maintenance operation, to perform steps of:
selecting the human operator for performing the maintenance operation,
generating a control signal to a terminal device of the selected human operator to cause performing of the maintenance operation.

The control system may also be configured to perform the selecting of the human operator on a basis of a capability of the human operator with respect to the maintenance operation.

According to a third aspect, a computer program comprising computer readable program code is provided, the computer program is configured to cause performing of the method according to the first aspect as defined above when the computer readable program code is run on one or more computing apparatuses.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically an example of a system.
Figure 2 illustrates schematically an example of a mobile robot.
Figure 3 illustrates schematically an example of a method.
Figure 4 illustrates schematically an example of data structure.
Figure 5 illustrates schematically further aspects in relation to the method.
Figure 6 illustrates schematically another further aspects in relation to the method.
Figure 7 illustrates schematically an example of a control system.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

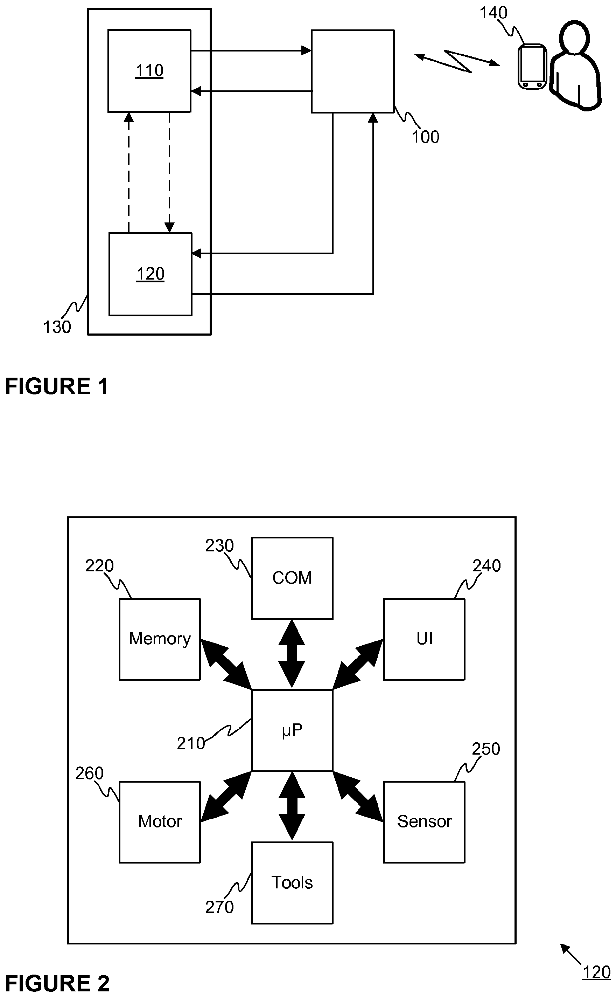

Figure 1 illustrates schematically an example of a system into which the present invention may be implemented to. The system comprises a control system 100 communicatively connected to at least one people conveyor system 110 arranged to operate on a site 130, such as in a building or in a ship. The people conveyor system may refer to an elevator system, to an escalator, and/or to a moving walkway. The site 130 may also be equipped with at least one mobile robot 120, or at least the site is accessible by the at least one mobile robot 120 even if the site is not permanently equipped with the mobile robot 120. The at least one mobile robot 120 is also communicatively connected at least with the control system 100, but they may also be communicatively connected directly to each other or to any other system as listed in the forthcoming description either directly or indirectly. The communication connection may be established directly with the control system 100 e.g. by arranging at least a portion of the communication connection in a wireless manner. Alternatively or in addition, the communication connection of the mobile robot 120 on the site may be arranged over the people conveyor system 110 so that the mobile robot 120 is communicatively connected with an entity of the people conveyor system 110, such as a controller, and, thus, the mobile robot 120 may communicate with the control system 100 through the conveyor system 110. Moreover, the control system 100 may be communicatively connected to a terminal device 140 of a person, called herein as a technician, wherein the technician may be called to perform maintenance task to the people conveyor system 110 when seen necessary. The communication connection between the control system 100 and the terminal device 140 may be at least in part implemented by utilizing one or more wireless communication technology. The terminal device 140 may e.g. be any hand-held device, such as a mobile terminal, a tablet computer, or a laptop computer.

The control system 100 configured to perform the method in a manner as described in the forthcoming description may be a computing device configured to process data. In some example embodiments, the control system 100 may be implemented with a plurality of computing devices arranged to implement distributed computing. In accordance with the implementation of Figure 1 the control system 100 is indicated to reside remotely from the site, but the computing system 100 may reside on the site. Moreover, the processes according to the present invention may be implemented by any other device than a dedicated control system 100. For example, in some example embodiments the control system 100 may be integrated to a controller of the people conveyor system 110. Alternatively or in addition, the control system 100 may be communicatively connected to one or more other systems, such as a service centre of the people conveyor system, a building/site management system (cf. residential building management system, hospital management system, factory management system, ship management system, and so on), a robot management system e.g. maintained by the robot manufacturer.

As already mentioned, the site 130 may be served by at least one mobile robot 120. An example of the mobile robot 120 is schematically illustrated in Figure 2.

The mobile robot 120 in the context of the present invention shall be understood as an autonomously, or semi-autonomously moving vehicle, adapted to travel in the site 130 and to execute one or more maintenance operations, such as cleaning, and similar. The mobile robot 120 may comprise at least the following entities: a processing unit 210, a memory unit 220, a communication unit 230, a user interface (UI) unit 240, a sensor unit 250, a motor unit 260, and a tool unit. The mentioned entities may comprise one or more operating units, e.g. one or more microprocessors or similar, one or more memories, one or more communication devices, such as modems, one or more user interface devices, one or more sensors and one or more motors among other components of the respective entities if any. In addition to the mentioned entities the mobile robot 120 may comprise further devices and entities, such as batteries for storing energy to be used by the other entities. The entities belonging to the mobile robot 120 may be communicatively coupled to each other with e.g. a communication bus.

From an operational point of view the processing unit 210 may be configured to control the operation of the mobile robot 120 as well as a communication with external entities e.g. in a manner as described in the forthcoming description. The communication with the external entities, such as with the control system 100, may be performed e.g. in a wireless manner. The sensor unit 250 may comprise any sensors by means of which the mobile robot 120 may obtain information on an environment, wherein non-limiting examples of the sensor may be a camera, a radar, a lidar and so on. Moreover, the sensor unit 250 may comprise sensors enabling positioning and/or navigation within the location. This may refer to devices enabling a utilization of one or more indoor positioning systems, e.g. those implemented on the site 130, and/or devices enabling positioning in outdoors. For sake of completeness it is worthwhile to mention that the positioning may, in some implementations, be based on a communication implemented over the communication interface 230 of the mobile robot 120. The processing unit 210 may also be configured to generate control signals to the motor unit 260 in order to make the mobile robot 110 to move. Moreover, the mobile robot 120 may comprise means enabling the robot to be mobile, such as any applicable transport means like wheels with other required elements and devices. Still further, the mobile robot 120 may comprise one or more tools belonging to the tool unit 270 which enable the mobile robot 120 to perform operations for the purpose of the present invention. The tools may refer to entities which enable performing maintenance operations on the site 130 especially with respect to the people conveyor system 110. As some non-limiting examples of the tools implementable in the mobile robot 120 it may be mentioned robot arms allowing a physical interaction with at least some entities, such as with operate buttons. The robot arms may also be equipped with a variety of devices and tools, such as a gripping tool, an image capturing device, a cleaning tool (e.g. a brush), a screw-driver, a chisel, an electricity tester (voltage, current), pneumatic tools e.g. for outputting pressurized air, and so on.

The operation of the processing unit 210 may be achieved by executing portions of computer program code stored e.g. in the memory unit 220 for generating the control signals and, thus, causing the mobile robot 120 to operate in a desired manner. The memory unit 220 may also be used for storing obtained and received information together with any other data either permanently or temporarily. Still further, it is worthwhile to mention that the communication unit 230 may, as already mentioned, comprise a number of devices configured to implement selected communication technologies preferably in a wireless manner so as to make the mobile robot 120 capable of communicating with various parties.

In some example embodiments the mobile robot 120 may be communicatively connected to a robot controller (not shown in Figure 1) over a communication network. The robot controller may be a computing device generating control signals to the mobile robot 120 as well as may receive signals from the mobile robot 120. Additionally, the robot controller may be communicatively connected to other entities, such as with the control system 100 and even with a controller of the people conveyor system 110. However, an implementation in which the control system 100 may directly communicate with the one or more mobile robots 120 is advantageous in view of the present invention.

In case the site 130 is served with a plurality of mobile robots 120 the mobile robots 120 may differ from each other in their capabilities. This may refer to that the mobile robots 120 are provided with different tools, for example. For the purpose of the present invention the control system 100 may be provided with an access to data storage arranged to store data defining the capabilities of the mobile robots 120. For example, the data may be stored in a database in which the mobile robots 120 are listed with their capabilities on a robot-by-robot basis.

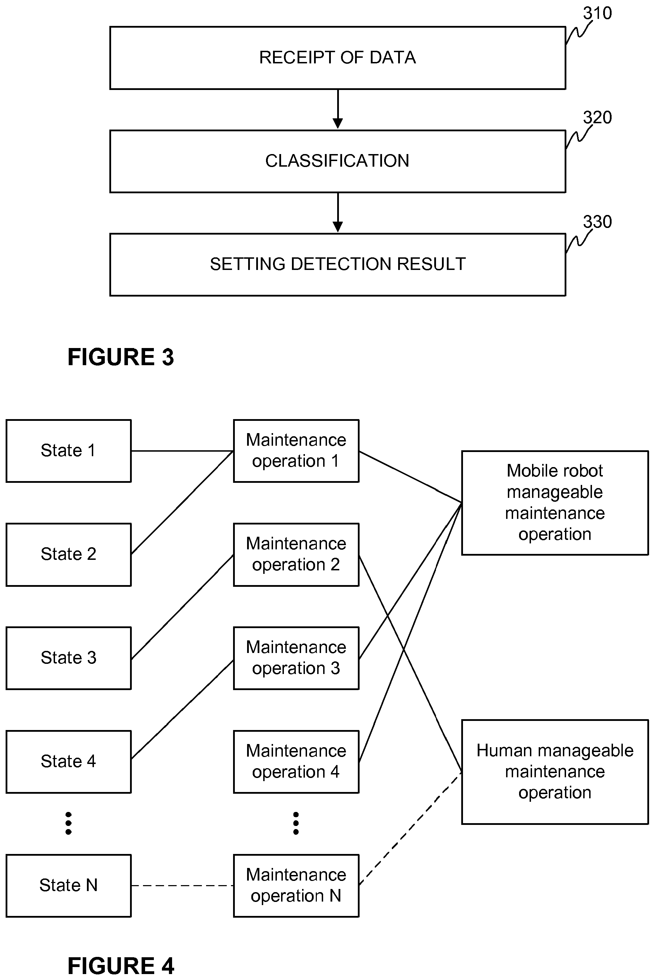

Next further aspects of the present invention are described by referring to Figure 3 schematically illustrating a method according to an example embodiment. The purpose of the method is to enable managing of a maintenance of a people conveyor system 110. The managing of the maintenance of the people conveyor system 110, i.e. the method, may be performed by the control system 100 in the example described herein.

First, the control system 100 receives 310 data indicative of a state of the people conveyor system 110. The data may refer to any data based on which it is possible to derive information on an operation of the people conveyor system 110. Especially the data may refer to data descriptive of malfunctioning of the people conveyor system 110, or an operation of the people conveyor system e.g. obtained through a testing process executable by the people conveyor system 110. In its simplest form it may comprise a fault code of an entity malfunctioning in the people conveyor system 110. Alternatively or in addition, it may be other data, such as measurement data obtained with a sensor, or similar e.g. through the above mentioned testing process, belonging to the people conveyor system 110, and the data is analyzed by the control system 100 in a predefined manner to determine a type of the state of the conveyor system 110, such as a type of malfunctioning of the people conveyor system 110. For sake of completeness it is worthwhile to mention that the data may be received by the control system 100 directly from the sensors or from a control unit configured to control an entity causing the malfunctioning. Alternatively or in addition, the data may be received from a safety circuit of the people conveyor system 110 if such safety circuit is present and arranged to generate data suitable for the purpose of the present invention, such as the fault codes as mentioned.

As non-limiting examples the data descriptive on the state of the people conveyor system 110 may comprise data received from various sources of the people conveyor system 110 in question. Depending on a type of the people conveyor system the data may be obtained, or received, from one or more following sources: limit switches, a drive (cf. frequency converter), in-car sensors (cf. camera, lidar, radar), light curtains arranged on a doorway, DOP/COP HMI devices, door actuator controller, accelerometer attached to an elevator car / an elevator door / conveyor mechanics, a comb plate. Moreover, such data may be obtained from a remote service centre system e.g. configured to schedule an operation of the people conveyor system, and so on.

In response to the receipt of data a classification 320 operation is performed. The classification 320 operation may be performed either based on the received data or data processed from the received data. In the classification 320 the state of the people conveyor system definable from the received data is classified 320 to correspond to a maintenance operation among a plurality of maintenance operations. In other words, the classification 320 may be understood as a process in which the state of the people conveyor system 110 is mapped with a maintenance operation related to the state of the people conveyor system 110 which allows to determine a party for taking measures with respect to the state of the people conveyor system 110.

In view of the foregoing description the classification 320 may be implemented so that the states of the people conveyor system 110 are linked to predefined maintenance operations. Such an approach, or data structure, is schematically illustrated in Figure 4. As seen from Figure 4 the maintenance operations, in turn, are linked to at least to two categories in which a first category represents operations which may be performed by the at least one mobile robot 120 and a second category represents operations which require a human being, e.g. a technician, to perform. Prior to performing the selection between the maintenance operations (marked as Operation 1, Operation 2, Operation 3, and so on in Figure 4) it may be arranged that the control system 100 configured to perform filtering out of such states of the conveyor system 110 which represent so-called normal state, i.e. the people conveyor system 110 operates as expected, or one of the maintenance operations corresponds to that no operations are performed into which such states of the conveyor system 110 are linked to. Now, in response to the receipt 310 of data descriptive on the state of the people conveyor system 110 (State 1, State 2, State 3, ..., State N), the control system 100 is configured to find a maintenance operation corresponding to the state of the conveyor system 110. This may be achieved by comparing a number of parameters derivable from the received data and representative of the state to corresponding parameters associated to the maintenance operations. In response to a match in a predefined accuracy it may be derived if the maintenance operation in question is manageable by a mobile robot 120 serving the site 130 or by a human operator based on the linking of information as schematically illustrated in Figure 4. Hence, in the classification 320 step the control system 100 is configured to classify the state of the people conveyor system to correspond to one maintenance operation among a plurality of maintenance operation wherein the plurality of maintenance operations at least comprises a number of mobile robot manageable maintenance operations and a number of human manageable maintenance operations.

The classification operation may be implemented by configuring the control system 100 to perform the comparison of the predefined parameters to reference data in accordance with predefined rules. Such an approach may be implemented with a programming the classification model as a static model for the task. In some other implementations, the classification operation may be established by training an application machine-learning model for the task. The training of the model may e.g. be performed automatically or semi-automatically. As a result of the training the machine-learning model is enabled to perform the classification and the operational data may be used for further training of the model.

In response to the classifying 320, or the determination as described, the control system 100 is configured to set 330, in accordance with a classification of the state of the people conveyor system in the described manner, a detection result to express one of the following: (i) a mobile robot is required to perform the maintenance operation, (ii) a human operator is required to perform the maintenance operation. The detection result may be expressed with an applicable indicator, such as generating a respective indicator and store that in a memory accessible by the control system 100. Alternatively or in addition, a signal may be generated into which signal data indicative of the detection result may be included. The signal may e.g. be a control signal and generated to the entity corresponding to the detection result, i.e. the mobile robot 120 or a terminal device 140 of the technician, wherein the detection result may cause, with any additional information included in the control signal, the respective party to take measures with respect to the state of the people conveyor system 110.

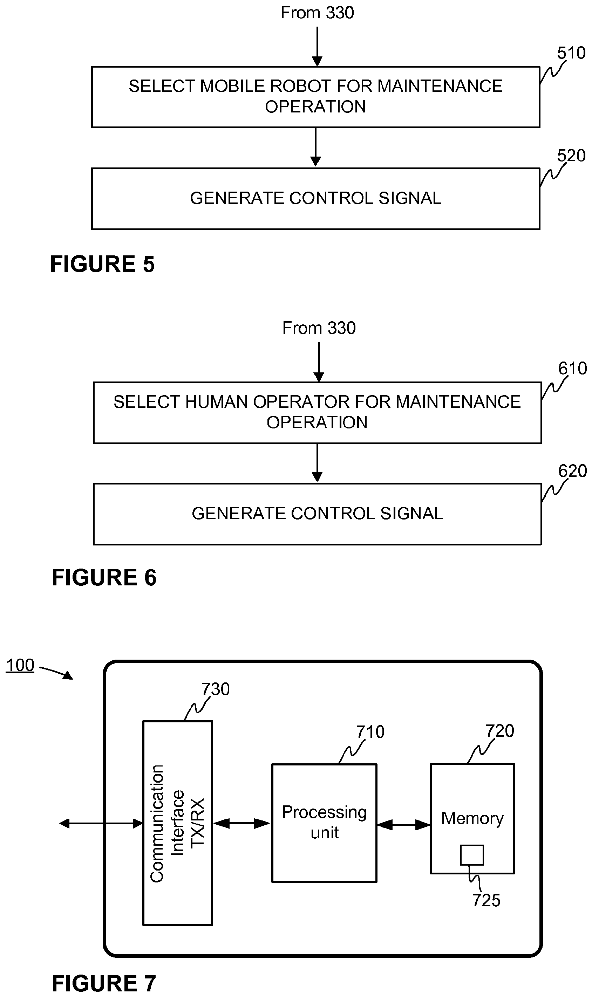

In embodiments in which there is arranged a plurality of mobile robots 120 to serve the site 130 the method in accordance with the present invention may be continued with further steps. Figure 5 illustrates schematically an example of the continuation of the method in accordance with an outcome in which it is detected that the defined maintenance operation is mobile robot 120 manageable. In step 510 it is selected a mobile robot 120 to take care of the maintenance operation determined during the classification 320. The selection of the mobile robot 120 may correspond to an operation in which, in response to the determination of the maintenance operation, it is obtained data defining requirements required from the mobile robot 120 to be capable of handling the maintenance operation in question. The data defining the requirements for the mobile robot 120 may comprise aspects in relation to a movement of the mobile robot 120, aspects in relation to communication capabilities, aspects in relation to tools of the mobile robot 120, aspects in relation to sensors of the mobile robot 120, aspects in relation to availability of the mobile robot 120 at a predefined instant of time, and so on. In other words, the capability of the mobile robot 120 may be determined primarily on the basis of technical capability of the mobile robot 120 to comply with the requirement, but as a secondary criterion an availability of the mobile robot 120 at the predefined instant of time having the technical capability may be used. The obtainment of the data may correspond to that the data is received from the data record defining the maintenance operation wherein the data record is provided with such data. With the data it is possible to generate an inquiry to data storage storing definitions of the mobile robots 110 and a response is received. The response may comprise data defining one or more suitable mobile robots 120 for the operation in question and the control system 100 may generate a control signal to the selected mobile robot 110 to request a performance of the respective maintenance operation. In some example embodiments, the data of the response to the inquiry may also define a communication address of the mobile robot 110 so as to enable the communication.

Figure 6 illustrates schematically an example of the continuation of the method in accordance with an outcome in which it is detected that the defined maintenance operation is human manageable. In step 610 a selection of a human operator is performed. The selection of the human operator, i.e. the technician, may be performed with an inquiry to data storage configured to store data of human operators. The data may e.g. define experience of the technicians, but also other data, such as availability of the technicians. Hence, the inquiry may define at least some information descriptive of the maintenance operation which enables finding a human operator having necessary capability or capabilities to perform the maintenance operation. Additionally, the inquiry may define an indicator of an urgency of the maintenance task which may then be used together with the availability information of the technicians. By using the predefined criteria a response to the inquiry is received wherein the response defines at least one technician for taking care of the maintenance operation. The response may also comprise contact data of the technician so as to enable a generation of a control signal 620 to the terminal device 140 of the respective technician to request service.

The continuation of the method as shown in Figure 6 may also be applied in a situation that it is not found an applicable, or available, mobile robot 120 in step 510 of Figure 5. In other words, if it is detected that no mobile robot 120 is suitable for implementing the determined maintenance operation, or it is not available in a required time window, the detection result according to step 330 is changed from that the mobile robot 120 is required to perform the maintenance operation to that the human operator is required to perform the maintenance operation. This causes the control system 100 to perform the selection of the human operator in accordance with the method as schematically illustrated in Figure 5.

Next an example is described in which the method according to the foregoing description is applied. The field of application in the example may be elevator doors which comprise a plurality of units enabling a motion of the doors. Thus, the control system 100 according to the present invention may receive 310 data indicative of the state of the elevator doors as the data descriptive of the state of the conveyor system 110. The data may e.g. comprise data representing a position of the door as well as a fault code wherein the fault code is descriptive on that the elevator door cannot be closed and the position data of the door describes the position when the closing is prevented. For the purpose of the description it may be assumed that in a first example, the position of the door is the same as the starting position when the doors are fully open, i.e. the closing of the doors does not occur at all. In a second example, the position of the door may be near the full closing, but the door remains open few centimeters. In response to the receipt 310 of data descriptive of the first example, i.e. the fault code representing the fault in the elevator doors and the position indicates that the closing does not start at all, the control system 100 may detect, based on a comparison to data indicating different malfunctioning situations, that the door motor generating a force for the operation of the elevator door has got broken which prevents closing of the door. Such a fault situation is linked to a maintenance operation defining a requirement to repair the motor, which typically corresponds to a replacement of the door motor. The maintenance operation in question is classified to be manageable by the human operator and such a detection result may be set 330. As a further step as shown in Figure 6 the control system 100 may initiate the selection 610 of the technician from data structure who is capable of repairing door motors immediately because the maintenance operation is immediately needed so as to return the elevator back in operation as soon as possible. In response to selecting the technician the control signal may be generated 620. On the other hand, if the received data indicates that the elevator door initiates closing, but stops near the full closing, as defined above as the second example, the control system 100, by evaluating the position of the door at which the closing ends together with the fault code, may detect that the reason for the situation is a foreign object in the pathway of the elevator door, such as a stone in a railway of the door. Such a fault may be overcome with a maintenance operation in which the foreign object is removed from the pathway and such an operation is described as a mobile robot manageable operation. In other words, the control system 100 ends up to classifying 320 the maintenance operation to be manageable by the mobile robot 120 and sets 330 such a detection result. Following such a detection result the control system 100 may be configured to select 510 the mobile robot 120 for the defined maintenance operation. The selection 510 may comprise finding a mobile robot 120 that is capable of moving and has a predefined tool for removing the foreign object to the pathway of the door. The tool may e.g. be a device mounted to a robot arm which device is capable of provide pressurized air to the area under cleaning so as to remove the foreign object from the doorway. In response to finding such a mobile robot 120 a control signal may be generated 520 wherein the control signal may define a location when the elevator car resides and the doors do not close as well as details on the maintenance task, for example. Moreover, in some embodiments the mobile robot 120 may be communicatively connected to a remote site, such as to a data centre wherefrom an operator may follow the cleaning operation e.g. from video stream generated by the mobile robot 120. the remote operator may also take a control over the mobile robot 120 if it is seen necessary for completing the task. The example described herein is quite simplified example and it is possible to develop more sophisticated approaches by increasing granularity in definitions descriptive of the fault situations which enables defining the required maintenance task in more accurately.

As already mentioned, the aspects of the present invention described herein are mainly done by referring to an implementation in which the controlling entity is a dedicated control system 100 as shown in Figure 7. As already mentioned, the functionality of the control system 100 may also be integrated to another computing device. An example of an apparatus configurable to implement the operation of the computing device, and, thus, the control system 100, is schematically illustrated in Figure 7. In other words, the control system 100 may be configured to perform the method according to the invention as described with the examples in the foregoing description. In other words, the apparatus of Figure 7 may be configured to perform a function to manage a maintenance of a people conveyor system 110. For sake of clarity, it is worthwhile to mention that the block diagram of Figure 7 depicts some components of an entity that may be employed to implement a functionality of the apparatus.

The apparatus of Figure 7 comprises a processor 710 and a memory 720. The memory 720 may store data, such as pieces of data as described, but also computer program code 725 causing the management of the maintenance in the described manner. The apparatus may further comprise a communication interface 730, such as a wireless communication interface or a communication interface for wired communication, or both to communicate with other entities as described. The communication interface 730 may thus comprise one or more modems, antennas, and any other hardware and software for enabling an execution of the communication e.g. under control of the processor 710. Furthermore, I/O (input/output) components may be arranged, together with the processor 710 and a portion of the computer program code 725, to provide a user interface for receiving input from a user, such as from a technician, and/or providing output to the user of the apparatus when necessary. In particular, the user I/O components may include user input means, such as one or more keys or buttons, a key-board, a touchscreen, or a touchpad, etc. The user I/O components may include output means, such as a loudspeaker, a display, or a touchscreen. The components of the apparatus may be communicatively connected to each other via data bus that enables transfer of data and control information between the components.

The memory 720 and at least a portion of the computer program code 725 stored therein may further be arranged, with the processor 710, to cause the apparatus to perform at least a portion of a method as is described herein. The processor 710 may be configured to read from and write to the memory 720. Although the processor 710 is depicted as a respective single component, it may be implemented as respective one or more separate processing components. Similarly, although the memory 720 is depicted as a respective single component, it may be implemented as respective one or more separate components, some, or all of which may be integrated/removable and / or may provide permanent / semi-permanent / dynamic / cached storage.

The computer program code 725 may comprise computer-executable instructions that implement functions that correspond to steps implemented in the method when loaded into the processor 710 of the respective control system 100. As an example, the computer program code 725 may include a computer program consisting of one or more sequences of one or more instructions. The processor 710 is able to load and execute the computer program by reading the one or more sequences of one or more instructions included therein from the memory 720. The one or more sequences of one or more instructions may be configured to, when executed by the processor 710, cause the apparatus to perform a method as described. Hence, the apparatus may comprise at least one processor 710 and at least one memory 720 including the computer program code 725 for one or more programs, the at least one memory 720 and the computer program code 725 configured to, with the at least one processor 710, cause the apparatus implementing the control system 100 to perform the method.

The computer program code 725 may be provided e.g. a computer program product comprising at least one computer-readable non-transitory medium having the computer program code 725 stored thereon, which computer program code 725, when executed by the processor 710, causes the apparatus to perform the method. The computer-readable non-transitory medium may comprise a memory device or a record medium, such as a CD-ROM, a DVD, a Blu-ray disc, or another article of manufacture that tangibly embodies the computer program. As another example, the computer program may be provided as a signal configured to reliably transfer the computer program.

Still further, the computer program code 725 may comprise a proprietary application, such as computer program code for causing an execution of the method in the manner as described in the description herein.

Any of the programmed functions mentioned may also be performed in firm-ware or hardware adapted to or programmed to perform the necessary tasks.

For sake of completeness it is worthwhile to mention that the entity performing the method in the role of the control system 100 may also be implemented with a plurality of apparatuses, such as the one schematically illustrated in Figure 7, as a distributed computing environment corresponding to a control system. For example, one of the apparatuses may be communicatively connected with the other apparatuses, and e.g. share the data of the method, to cause another apparatus to perform at least one other portion of the method. As a result, the method performed in the distributed computing environment generates the control signal indicative of the assignment of the responsibility as described. For example, some steps of the method may be shared between the control system 100, an elevator controller, and a robot controller, for example.

The solution in accordance with the present invention allows managing maintenance operations to people conveyor systems in a manner increasing efficiency and resulting cost-savings. The term 'maintenance operation' shall be understood in a broad manner in the context of the present invention and to cover both any such operations in which the maintenance operation solves a malfunction but also to cover any operations in which the state of the people conveyor system requires a generation of additional data, such as by performing a testing operation or any similar.

The specific examples provided in the description given above should not be construed as limiting the applicability and/or the interpretation of the appended claims. Lists and groups of examples provided in the description given above are not exhaustive unless otherwise explicitly stated.

## Claims

1. A method for managing a maintenance of a people conveyor system (110), the method, performed by a control system (100), comprises:
receiving (310) data indicative of a state of the people conveyor system (110),
**characterized in that** the method further comprises:
classifying (320) the state of the people conveyor system (110) to correspond to one maintenance operation among a plurality of maintenance operations , the plurality of maintenance operations at least comprising a number of mobile robot (120) manageable maintenance operations and a number of human manageable maintenance operations,
setting (330), in accordance with a classification of the state of the people conveyor system (110), a detection result to express one of the following: (i) a mobile robot (120) is required to perform the maintenance operation, (ii) a human operator is required to perform the maintenance operation.

2. The method according to claim 1, wherein the data indicative of the state of the people conveyor system (110) is received from at least one of the following: a controller of the people conveyor system (110); at least one sensor arranged to measure at least one parameter descriptive of an operation of the people conveyor system (110); a safety circuit of the people conveyor system (110); a remote service centre of the people conveyor system (110).

3. The method according to claim 1 or claim 2, wherein the data received comprises a fault code in the data descriptive of the state of the people conveyor system (110).

4. The method according to any of the preceding claims, wherein the classifying (320) comprises a comparison of a number of parameters descriptive of the state of the people conveyor system (110) to corresponding parameters associated to each maintenance operation among the plurality of the maintenance operations.

5. The method according to any of the preceding claims, the method further comprises, in response to setting the detection result to express that the mobile robot (120) is required to perform the maintenance operation, steps of:
selecting (510) the mobile robot (120) for performing the maintenance operation,
generating (520) a control signal to the selected mobile robot (120) to cause performing of the maintenance operation.

6. The method according to claim 5, wherein the selecting (510) of the mobile robot (120) is performed on a basis of a capability of the mobile robot (120) with respect to the maintenance operation.

7. The method of claim 6, wherein the capability of the mobile robot (120) is defined based on a technical capability of the mobile robot (120) to perform the maintenance operation.

8. The method of claim 7, wherein the capability of the mobile robot (120) is further defined based on an availability of the mobile robot (120) to perform the maintenance operation at a predefined instant of time.

9. The method according to any of the preceding claims 1 to 4, the method further comprises, in response to setting the detection result to express that the human operator is required to perform the maintenance operation, steps of:
selecting (610) the human operator for performing the maintenance operation,
generating (620) a control signal to a terminal device (140) of the selected human operator to cause performing of the maintenance operation.

10. The method according to claim 9, wherein the selecting (610) of the human operator is performed on a basis of a capability of the human operator with respect to the maintenance operation.

11. A control system (100) for managing a maintenance of a people conveyor system (110), the control system (100) is configured to execute the steps of the method according to any of claims 1 to 10.

12. A computer program comprising computer readable program code configured to cause performing of the method according to any of claims 1 to 10 when the computer readable program code is run on at least on processor of the control system (100) according to claim 11.

## Patentansprüche

1. Verfahren zum Verwalten einer Wartung eines Personenfördersystems (110), wobei das Verfahren, das durch ein Steuersystem (100) durchgeführt wird, umfasst:
Empfangen (310) von Daten, die einen Zustand des Personenfördersystems (110) angeben,
**dadurch gekennzeichnet, dass** das Verfahren ferner umfasst:
Klassifizieren (320) des Zustands des Personenfördersystems (110), so dass er einem Wartungsvorgang unter mehreren Wartungsvorgängen entspricht, wobei die mehreren Wartungsvorgänge mindestens eine Anzahl von handhabbaren Wartungsvorgängen des mobilen Roboters (120) und eine Anzahl von handhabbaren Wartungsvorgängen des Menschen umfassen,
Einstellen (330), gemäß einer Klassifizierung des Zustands des Personenfördersystems (110), eines Detektionsergebnisses, um eines der folgenden auszudrücken: (i) ein mobiler Roboter (120) ist erforderlich, um den Wartungsvorgang durchzuführen, (ii) ein menschlicher Bediener ist erforderlich, um den Wartungsvorgang durchzuführen.

2. Verfahren nach Anspruch 1, wobei die Daten, die den Zustand des Personenfördersystems (110) angeben, von mindestens einem der Folgenden empfangen werden: einer Steuerung des Personenfördersystems (110); mindestens einem Sensor, der angeordnet ist, um mindestens einen Parameter zu messen, der einen Betrieb des Personenfördersystems (110) beschreibt; einer Sicherheitsschaltung des Personenfördersystems (110); einem entfernten Servicezentrum des Personenfördersystems (110).

3. Verfahren nach Anspruch 1 oder Anspruch 2, wobei die empfangenen Daten einen Fehlercode in den Daten umfassen, die den Zustand des Personenfördersystems beschreiben (110).

4. Verfahren nach einem der vorhergehenden Ansprüche, wobei das Klassifizieren (320) einen Vergleich einer Anzahl von Parametern umfasst, die den Zustand des Personenfördersystems (110) beschreiben, mit entsprechenden Parametern, die mit jedem Wartungsvorgang unter den mehreren Wartungsvorgängen assoziiert sind.

5. Verfahren nach einem der vorhergehenden Ansprüche, wobei das Verfahren ferner als Reaktion auf das Einstellen des Detektionsergebnisses zum Ausdrücken, dass der mobile Roboter (120) zum Durchführen des Wartungsvorgangs erforderlich ist, die folgenden Schritte umfasst:
Auswählen (510) des mobilen Roboters (120) zum Durchführen des Wartungsvorgangs,
Erzeugen (520) eines Steuersignals an den ausgewählten mobilen Roboter (120), um das Durchführen des Wartungsvorgangs zu bewirken.

6. Verfahren nach Anspruch 5, wobei das Auswählen (510) des mobilen Roboters (120) auf Basis einer Fähigkeit des mobilen Roboters (120) in Bezug auf den Wartungsvorgang durchgeführt wird.

7. Verfahren nach Anspruch 6, wobei die Fähigkeit des mobilen Roboters (120) basierend auf einer technischen Fähigkeit des mobilen Roboters (120) zum Durchführen des Wartungsvorgangs definiert wird.

8. Verfahren nach Anspruch 7, wobei die Fähigkeit des mobilen Roboters (120) ferner basierend auf einer Verfügbarkeit des mobilen Roboters (120) zum Durchführen des Wartungsvorgangs zu einem vordefinierten Zeitpunkt definiert wird.

9. Verfahren nach einem der vorhergehenden Ansprüche 1 bis 4, wobei das Verfahren ferner als Reaktion auf das Einstellen des Detektionsergebnisses, um auszudrücken, dass der menschliche Bediener zum Durchführen des Wartungsvorgangs erforderlich ist, die folgenden Schritte umfasst:
Auswählen (610) des menschlichen Bedieners zur Durchführung des Wartungsvorgangs,
Erzeugen (620) eines Steuersignals an ein Endgerät (140) des ausgewählten menschlichen Bedieners, um das Durchführen des Wartungsvorgangs zu bewirken.

10. Verfahren nach Anspruch 9, wobei das Auswählen (610) des menschlichen Bedieners auf Basis einer Fähigkeit des menschlichen Bedieners in Bezug auf den Wartungsvorgang durchgeführt wird.

11. Steuersystem (100) zum Verwalten einer Wartung eines Personenfördersystems (110), das Steuersystem (100) ist dazu ausgelegt, die Schritte des Verfahrens nach einem der Ansprüche 1 bis 10 auszuführen.

12. Computerprogramm, das computerlesbaren Programmcode umfasst, der dazu ausgelegt ist, das Durchführen des Verfahrens nach einem der Ansprüche 1 bis 10 zu bewirken, wenn der computerlesbare Programmcode auf mindestens einem Prozessor des Steuersystems (100) nach Anspruch 11 ausgeführt wird.

## Revendications

1. Procédé de gestion de maintenance d'un système de transport de personnes (110), le procédé, exécuté par un système de commande (100), comprenant :
la réception (310) de données indicatives d'un état du système de transport de personnes (110),
**caractérisé en ce que** le procédé comprend en outre :
la classification (320) de l'état du système de transport de personnes (110) de manière qu'il corresponde à une opération de maintenance parmi une pluralité d'opérations de maintenance, la pluralité d'opérations de maintenance comprenant au moins un certain nombre d'opérations de maintenance gérables par robot mobile (120) et un certain nombre d'opérations de maintenance gérables par l'homme, l'établissement (330), conformément à une classification de l'état du système de transport de personnes (110), d'un résultat de détection pour exprimer l'une des situations suivantes : (i) un robot mobile (120) est nécessaire pour effectuer l'opération de maintenance, (ii) un opérateur humain est nécessaire pour effectuer l'opération de maintenance.

2. Procédé selon la revendication 1, dans lequel les données indicatives de l'état du système de transport de personnes (110) sont reçues d'au moins l'un des éléments suivants : un contrôleur du système de transport de personnes (110) ; au moins un capteur conçu pour mesurer au moins un paramètre descriptif d'un fonctionnement du système de transport de personnes (110) ; un circuit de sécurité du système de transport de personnes (110) ; un centre de service à distance du système de transport de personnes (110).

3. Procédé selon la revendication 1 ou la revendication 2, dans lequel les données reçues comprennent un code de défaut dans les données descriptives de l'état du système de transport de personnes (110).

4. Procédé selon l'une quelconque des revendications précédentes, dans lequel la classification (320) comprend une comparaison d'un certain nombre de paramètres descriptifs de l'état du système de transport de personnes (110) à des paramètres correspondants associés à chaque opération de maintenance parmi la pluralité d'opérations de maintenance.

5. Procédé selon l'une quelconque des revendications précédentes, le procédé comprenant en outre, en réponse à l'établissement du résultat de détection pour exprimer que le robot mobile (120) est nécessaire pour effectuer l'opération de maintenance, les étapes suivantes :
la sélection (510) du robot mobile (120) pour effectuer l'opération de maintenance,
la génération (520) d'un signal de commande destiné au robot mobile sélectionné (120) pour provoquer l'exécution de l'opération de maintenance.

6. Procédé selon la revendication 5, dans lequel la sélection (510) du robot mobile (120) est effectuée sur la base d'une capacité du robot mobile (120) en ce qui concerne l'opération de maintenance.

7. Procédé selon la revendication 6, dans lequel la capacité du robot mobile (120) est définie sur la base d'une capacité technique du robot mobile (120) à effectuer l'opération de maintenance.

8. Procédé selon la revendication 7, dans lequel la capacité du robot mobile (120) est en outre définie sur la base d'une disponibilité du robot mobile (120) pour effectuer l'opération de maintenance à un instant prédéfini.

9. Procédé selon l'une quelconque des revendications précédentes 1 à 4, le procédé comprenant en outre, en réponse à l'établissement du résultat de détection pour exprimer que l'opérateur humain est nécessaire pour effectuer l'opération de maintenance, les étapes suivantes :
la sélection (610) de l'opérateur humain pour effectuer l'opération de maintenance,
la génération (620) d'un signal de commande à destination d'un dispositif terminal (140) de l'opérateur humain sélectionné pour provoquer l'exécution de l'opération de maintenance.

10. Procédé selon la revendication 9, dans lequel la sélection (610) de l'opérateur humain est effectuée sur la base d'une capacité de l'opérateur humain en ce qui concerne l'opération de maintenance.

11. Système de commande (100) pour gérer une maintenance d'un système de transport de personnes (110), le système de commande (100) étant configuré pour exécuter les étapes du procédé selon l'une quelconque des revendications 1 à 10.

12. Programme informatique comprenant un code de programme lisible par ordinateur configuré pour provoquer l'exécution du procédé selon l'une quelconque des revendications 1 à 10 lorsque ledit code de programme lisible par ordinateur est exécuté au moins un processeur du système de commande (100) selon la revendication 11.
